# EUROPEAN PATENT SPECIFICATION

(11) **EP 0 771 745 B1**
(45) Date of publication and mention of the grant of the patent: **22.09.1999**
(21) Application number: 96202158.0
(22) Date of filing: 30.07.1996
(51) Int. Cl.: B65G 45/24

(54) **Process and apparatus for cleaning and making conveyor belts more hygienic, in particular in the food industry**
Verfahren und Vorrichtung zum Waschen und zum hygienischen Reinigen von Förderbändern, insbesondere für die Nahrungsmittelindustrie
Procédé et dispositif pour laver et pour rendre plus hygiénique les bandes convoyeuses, en particulier dans l'industrie alimentaire

(30) Priority: 03.11.1995 IT TO950888
(43) Date of publication of application: 07.05.1997
(73) Proprietor: R.E.A. s.n.c. di Sassi e Baudin & C., 10028 Trofarello (Torino) (IT)
(72) Inventor: Sassi, Stefano, 10024 Moncalieri, Turin (IT); Sassi, Virginio, 10024 Moncalieri, Turin (IT)
(74) Representative: Robba, Eugenio

(56) References cited:
- FR-A- 2 200 171
- FR-A- 2 674 457
- GB-A- 900 060
- US-A- 5 333 724

## Description

The present invention refers to a process and related apparatus for cleaning and making conveyor belts more hygienic, in particular in the food industry.

A method for cleaning conveyor belts is disclosed in US 5,333,724.

According to the teaching of US 5,333,724, a conveyor belt is cleaned by applying firstly a washing step, in which a cleaning solution or heated water is sprayed close to the belt surface, followed by an abrading step, in which dirt is detached from the belt surface through brushes, and then a dirt removing step, in which dirt is sucked by vacuum.

An apparatus for cleaning conveyor belts is disclosed in FR 2674457 which teaches of an apparatus comprising a box-type container equipped with flat bands and brushes in order to create together with the surface of the belt a spaying chamber and a vacuum chamber communicating, respectively, with jetting and intake ducts provided on the rear portion of the container.

According to FR 2674457 the belt surface is cleaned by ejecting water or a detergent mixture in the spraying chamber while dirt is removed by suction.

A cleaning apparatus incorporating a suction unit, a steam generator and a cleaning head equiped with a first opening communicating with said suction unit and a second opening communicating with said steam generator is disclosed in Italian Patent No.01264355.

According to Italian Patent No.01264355 a cleaning liquid delivered by means of a pump or through Venturi effect is heated by means of steam mixed upstream of the cleaning head and thus delivered against the surface to be cleaned via a duct or nozzle provided in the cleaning head.

It is known how the problem of cleaning conveyor belts, and foodstuffs in particular, is very important nowadays, both due to the current hygienic and sanitary needs, and due to the increasing complexity of the automatized and mechanized plants that use a belt to handle foodstuffs.

The purpose of the present invention is to solve this problem by providing a process and related apparatus that allow an optimal and quick cleaning of the conveyor belt in addition to making it more hygienic after having performed the cleaning.

The process and apparatus of the present invention are applied to any type of conveyor belt and in spite of the working conditions of the belt itself and of the type of treated product.

The purpose of the present invention is achieved by means of a method and apparatus as claimed in claims 1 and 3 respectively.

The apparatus through which the above process can be carried out can substantially be of two types: manual or automatic; a manual one is generally used for alternate cleanings through an operator, an automatic one is used for continuous cleanings and in hard conditions, managed by an operator but with autonomous functionalities.

Both apparata, obviously, must be connected to a steam generator and to a liquid and/or aeriform substances aspirator, sized depending on the type of plant.

Moreover, the steam generator must be equipped with a delivering plant for water and/or detergent mixture, that is necessary for a good apparatus efficiency.

The major features of the embodiments of the apparata through which the above process can be carried out will appear from the enclosed claims.

Two embodiments of the apparata through which the process of the present invention can be carried out will now be described.
Figure 1 is a schematic sectional view of an embodiment of an automatic apparatus, suitable for cleaning both faces of a belt;
Figure 2 is a schematic sectional view of another embodiment of a manual apparatus.

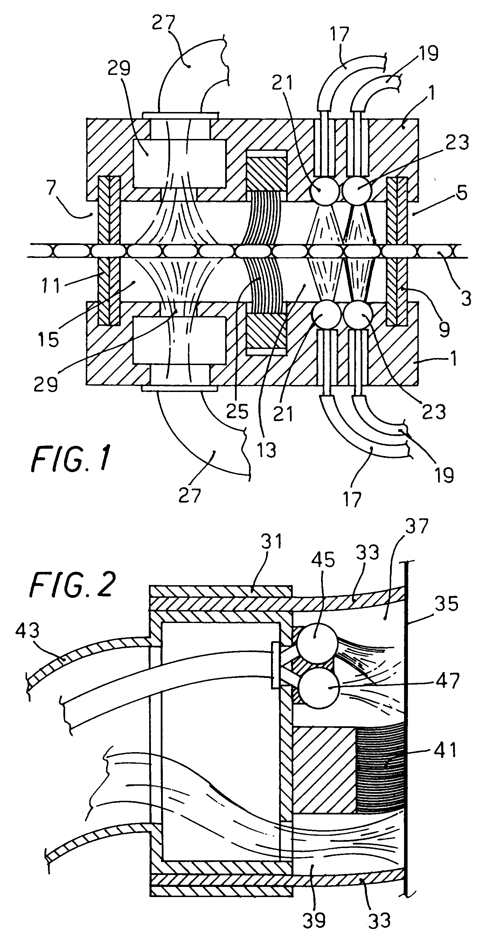

As apparent from Figure 1, the first embodiment of the apparatus to clean and make conveyor belts more hygienic according to the present invention is substantially composed of a box-type container 1, of a light and strong material, inside which the belt 3 to be cleaned and made more hygienic runs.

This box-type container 1 has an inlet mouth 5 and an outlet mouth 7 through which the belt 3 will run; suitable flat bands 9 and 11 are provided next to said mouths 5 and 7 to seal the recesses 13 and 15 formed inside the box-type container 1.

On the upper and lower walls of the recess 13, two ducts 17 and 19 are provided, above and below the conveyor belt 3 to be cleaned, one of said ducts being the steam duct 17, the other one being the water or detergent mixture duct 19; both steam and water or detergent mixture are sprayed on the belt 3 through respective delivering devices 21, 23.

Downstream of said spraying chamber 13, two abrading bristles 25 are provided, that operate above and below the belt 3 to detach the dirt removed from the belt by the above-said steam jet 17 and water or mixture jet 19.

Downstream of said abrading bristles 25, the vacuum recess 15 is provided, said recess being connected, on both sides of the belt, to two intake ducts 27, adapted to suck the dirt removed from the belt 3 in addition to the direct and remaining steam sent to said chamber and coming from the chamber 13. Said intake ducts 27 operate in said chamber 15 through two intake mouths 29.

In the second embodiment shown in Figure 2, the apparatus of the invention is substantially composed of a box-type container 31, equipped with suitable flat bands 33 in order to create, together with the surface 35 to which the apparatus is applied, a spraying chamber 37 and a vacuum chamber 39, separated by suitable bristles 41 similarly to the first above-described embodiment.

On the rear part of the box-type container 31 a pipe 43 is provided to support the container and house jetting and intake ducts connected to spraying chamber 37 and vacuum chamber 39.

Steam and water or detergent mixture are ejected in the spraying chamber 37 through the delivering devices 45 and 47 to remove, as in the first case, dirt from the surface 35.

In the vacuum chamber 39 there occurs, through the intake duct 43, the suction of steam and dirt residuals removed from the surface 35, similarly to what is done in the first embodiment.

The operations are obvious: the belt 3, after being inserted in the apparatus 1, gets in contact, in 13, with a steam jet 17 and a water and/or detergent mixture jet 19; in this way, the belt 3 is heated and the action of the two jets starts removing dirt particles.

Afterwards, the belt passes through the bristles 25 of a brush that brushes the belt 3 and removes the particles detached from the belt; these particles pass through said bristles 25 and settle into the vacuum chamber 15.

In the vacuum chamber 15 these particles, together with steam and water or mixture sent to the belt in the spraying chamber 13, are sucked and taken away by the intake ducts 27.

The belt 3 is then again subjected to the above-mentioned cycle for the number of times that is deemed necessary in order to reach a satisfactory cleaning thereof.

Now, in order to further clean the belt, the third step is carried out, that is the step of making the belt more hygienic: the water and/or detergent mixture duct 19 is closed and usually steam 17 is sent to the belt 3, till it is heated, said steam being again sucked by the intake ducts 27 that are connected to the vacuum chamber 15; the process goes on until the film that normally protects bacteria on the belt is broken, so that operations are performed at a depth on the surface of said belt, making it clean in a way not obtainable so far.

With the apparatus in Figure 2 the cycle is substantially the same; the only difference is that the surface 35 to be cleaned can be not only a belt but any type of surface and the apparatus is handled manually or is applied to a frame (not shown) suitable for the surface to be cleaned.

It is obvious that the embodiments described are provided simply as a non-limiting example, as embodiments of apparata through which the process of the invention is applied, the scope of the invention being defined by the following claims.

## Claims

1. Process for washing and making conveyor belts more hygienic, in particular in the food industry, comprising two steps that can be carried out cyclically and precisely:
a first, or washing, step, that consists in sending to the belt surface; a water jet (19) a detergent solution being usable instead of the water jet (19) in order to improve the washing operation;
a second, or dirt removing, step, that firstly consists in abrading the belt (3) through brush bristles (25) made of a material that depends on the belt type, said abrading operation comprising a first removal operation of the dirt made detachable by the first step, followed by a second dirt removing operation, carried out by sucking said dirt residuals in a vacuum chamber (15) through an intake duct (27) connected to said vacuum chamber (15); this second operation being followed by the evaporation of the remaining belt (3) humidity being carried out through heat, so that the belt surface drys;
characterized in that in said washing step a steam jet (17) is mixed with said water jet whereby belt heating or overheating occurs depending on the jets' (17,19) temperature and treatment time, such temperature being adapted to enable the detachment and removal of the belt dirt.

2. Process according to claim 1, characterized in that it further comprises
a third step or step to make the surface more hygienic, that can be carried out after a certain number of cycles of the first and second steps and when it is deemed adequate, said third step consisting in again circulating steam (17) on the belt (3) to be made more hygienic, heating it and sucking the waste thus generated, making said belt surface completely free from bacteria.

3. Apparatus for washing and making surfaces in general more hygienic comprising a box-type container (31), equipped with suitable flat bands (33) in order to create, together with the surface (35) to which the apparatus is applied, a spraying chamber (37) and a vacuum chamber (39), separated by suitable bristles (41); on the rear part of the box-type container (31) a pipe (43) being provided to support the box-type container (31) and house jetting and intake ducts connected to spraying chamber (37) and vacuum chamber (39); water or detergent mixture being ejected in the spraying chamber (37) through a first delivering device (47) to remove dirt from the surface (35); in the vacuum chamber (39), dirt and residuals being removed from the surface (35) through the intake duct (43) by suction,
characterized in that a steam jet (17) is injected into the spraying chamber through a second delivering device (45).

4. Apparatus for washing and making conveyor belt surfaces more hygienic according to claim 3, characterized in that said container (1), inside which the belt (3) to be cleaned and made more hygienic runs; comprises an inlet mouth (5) and an outlet mouth (7) through which the belt (3) will run; suitable flat bands (9) and (11) being provided next to said mouths (5, 7) to seal the recesses (13, 15) formed inside the box-type container (1); on the upper and lower walls of the recess (13), two ducts (17, 19) being provided, above and below the conveyor belt (3) to be cleaned, one of said ducts being the steam duct (17), the other one being the water or detergent mixture duct (19); both steam and water or detergent mixture being sprayed on the belt (3) through respective delivering devices (21), (23); downstream of said spraying chamber (13), two abrading bristles (25) being provided, that operate above and below the belt (3) to detach the dirt removed from the belt by the above-said steam jet (17) and water or mixture jet (19); downstream of said abrading bristles (25), the vacuum recess (15) being provided, said recess being connected, on both sides of the belt (3), to two intake ducts (27), adapted to suck the dirt removed from the belt (3) in addition to the direct and remaining steam sent to said chamber (15) and coming from the chamber (13), said intake ducts (27) operating in said chamber (15) through two intake mouths (29).

## Patentansprüche

1. Verfahren zum Waschen und zum Verbessern der Hygienie von Förderbändern, insbesondere für die Nahrungsmittelindustrie, das zwei Schritte umfaßt, die zyklisch und genau durchführbar sind:
einen ersten Schritt oder Waschschritt, bei dem ein Wasserstrahl (19) auf die Bandoberfläche gerichtet wird, wobei anstelle des Wasserstrahles (19) eine Reinigungsmittellösung verwendbar ist, um den Waschvorgang zu verbessern;
einen zweiten oder schmutzentfernenden Schritt, der hauptsächlich darin besteht, das Band (3) mit Bürstenborsten (25) abzureiben, die aus einem Material bestehen, das sich nach der Art des Bandes richtet, wobei der Abreibvorgang einen ersten Lösevorgang zum Entfernen des Schmutzes umfaßt, der im ersten Schritt abgelöst wurde, wobei danach ein zweiter Arbeitsgang zum Entfernen des Schmutzes anschließt, bei dem die Schmutzreste in einer Vakuumkammer (15) über eine Saugleitung (27) abgesaugt werden, die mit der Vakuumkammer (15) verbunden ist; wobei auf den zweiten Arbeitsgang das Verdampfen der verbleibenden Feuchtigkeit des Bandes (3) durch Hitze folgt, so daß die Bandoberfläche trocknet;
dadurch gekennzeichtnet, daß beim Waschvorgang ein Dampfstrahl (17) mit dem Wasserstrahl gemischt wird, wobei das Band erhitzt oder überhitzt wird in Abhängigkeit von der Temperatur und der Behandlungszeit der Strahlen (17,19), und daß die Temperatur so gewählt wird, daß ein Lösen und Entfernen des Bandschmutzes ermöglicht wird.

2. Verfahren nach Anspruch 1,
dadurch gekennzeichnet, daß es ferner einen dritten Schritt oder einen Schritt zum Verbessern der Oberflächenhygiene umfaßt, der nach einer bestimmten Zahl von Zyklen der ersten und zweiten Schritte ausführbar ist und wenn er angemessen erscheint, daß im dritten Schritt zum Verbessern der Bandhygiene wieder Dampf (17) auf das Band (3) geleitet wird, und daß das Band erhitzt und die so gebildeten Verunreinigungen abgesaugt werden, um die Bandoberfläche vollständig von Bakterien zu befreien.

3. Vorrichtung zum Waschen und zum Verbessern der Hygiene von Oberflächen, mit einem kastenartigen Behältnis (31), das geeignete flache Bänder (33) aufweist, um zusammen mit der Oberfläche (35), die mit der Vorrichtung behandelt wird, eine Sprühkammer (37) und eine Vakuumkammer (39) zu bilden, die durch geeignete Borsten (41) voneinander getrennt sind; mit einem am rückwärtigen Teil des kastenartigen Behältnisses (31) vorgesehenen Rohr (43) zum Tragen des kastenartigen Behälters (31) und zur Aufnahme von Dampf- und Saugleitungen, die mit der Sprühkammer (37) und der Vakuumkammer (39) verbunden sind, wobei Wasser oder eine Reinigungsmittelmischung über eine erste Zuführvorrichtung (47) in die Sprühkammer (37) gesprüht wird, um Schmutz von der Oberfläche (35) zu entfernen, wobei in der Vakuumkammer (39) Schmutz- und Rückstände, die von der Oberfläche (35) entfernt worden sind, über die Saugleitung (43) abgesaugt werden,
dadurch gekennzeichnet, daß über eine zweite Zuführvorrichtung (45) ein Dampfstrahl (17) in die Sprühkammer gesprüht wird.

4. Vorrichtung zum Waschen und zum Verbessern der Hygiene der Oberfläche von Förderbändern gemäß Anspruch 3,
dadurch gekennzeichnet, daß das Behältnis (1), in dem das Band (3) gereinigt und in weiteren Durchläufen zum Verbessern seiner Hygiene geführt wird, eine Einlaßöffnung (5) und eine Auslaßöffnung (7) aufweist, durch die das Band (3) bewegt wird, daß benachbart zu den Öffnungen (5, 7) geeignete flache Bänder (9 und 11) zum Abdichten der im kastenartigen Behältnis (1) befindlichen Kammern (13, 15) vorgesehen sind; daß auf den oberen und unteren Wänden der Kammer (13) zwei Leitungen (17, 19) vorgesehen sind, daß ober- und unterhalb des zu reinigenden Förderbandes (3) die eine Leitung die Dampfleitung (17) und die andere die Wasser- oder Reinigungsmittelmischleitung (19) ist, daß Dampf und Wasser oder Reinigungsmittelmischung über entsprechende Zuführvorrichtungen (21, 23) auf das Band (3) gesprüht werden, daß in Transportrichtung nach der Sprühkammer (13) zwei Abreibbeborstungen (25) vorgesehen sind, die oberhalb und unterhalb des Bandes (3) angeordnet sind und den vom Band gelösten Schmutz mittels des Dampfstrahles (17) und des Wasser- oder Reinigungsstrahles (19) entfernen, daß in Transportrichtung hinter den Abreibbeborstungen (25) die Vakuumkammer (15) vorgesehen ist, die auf beiden Seiten des Bandes (3) mit zwei Saugleitungen (27) verbunden ist, die zum Absaugen des vom Band (3) gelösten Schmutzes zusätzlich vorgesehen sind, der zusätzlich zu dem unmittelbaren und verbleibenden Dampf abgesaugt wird, der in die Kammer (15) gelangt und aus der Kammer (13) kommt, und daß diese Saugleitungen (27) durch zwei Saugöffnungen (29) in der Kammer (15) wirksam sind.

## Revendications

1. Procédé pour laver et rendre plus hygiéniques des bandes convoyeuses, en particulier dans l'industrie alimentaire, comprenant deux étapes qui peuvent être réalisées cycliquement et de façon précise:
une première étape, ou étape de lavage, qui consiste à envoyer sur la surface de la bande un jet d'eau (19), une solution de détergent pouvant être utilisée au lieu du jet d'eau (19) afin d'améliorer l'opération de lavage ;
une seconde étape , ou étape d'élimination de la saleté, qui consiste premièrement à frotter la bande (3) au moyen de poils de brosse (25) constitués d'un matériau qui dépend du type de bande, ladite opération de frottement comprenant une première opération d'élimination de la saleté rendue détachable par l'intermédiaire de la première étape , suivie d'une seconde opération d'élimination de la saleté, réalisée en aspirant ladite saleté résiduelle dans une chambre à vide (15) par un conduit d'admission (27) connecté à ladite chambre à vide (15) ; cette seconde opération étant suivie de l'évaporation de l'humidité restante de la bande (3) réalisée au moyen de chaleur, de sorte que la surface de la bande sèche ;
caractérisé en ce que dans ladite étape de lavage un jet de vapeur (17) est mélangé audit jet d'eau de façon qu'un chauffage ou un surchauffage de la bande se produise en fonction de la température du jet et du temps de traitement au jet (17, 19), cette température étant adpatée pour permettre de détacher et d'éliminer la saleté de la bande.

2. Procédé selon la revendication 1, caractérisé en ce qu'il comprend, de plus :
une troisième étape ou étape servant à rendre la surface plus hygiénique, qui peut être réalisée après un certain nombre de cycles des première et seconde étapes et lorsque cela est estimé approprié, ladite troisième étape consistant à faire à nouveau circuler la vapeur (17) sur la bande (3) pour la rendre plus hygiénique, à chauffer et à aspirer les résidus ainsi générés, rendant ladite surface de bande totalement exempte de bactéries.

3. Dispositif pour laver et rendre les surfaces plus hygiéniques de façon générale comprenant un conteneur de type boîte (31), muni de bandes plates appropriées (33) afin de créer, avec la surface (35) sur laquelle le dispositif est appliqué, une chambre de pulvérisation (37) et une chambre à vide (39), séparées par des brosses appropriées (41) ; sur la partie arrière du conteneur de type boîte (31) un tuyau (43) étant fourni pour supporter le conteneur de type boîte (31) et loger des conduites de jet et d'admission connectées à la chambre de pulvérisation (37) et à la chambre à vide (39) ; de l'eau ou un mélange de détergent étant éjecté dans la chambre de pulvérisation (37) à travers un premier dispositif de distribution (47) pour éliminer la saleté de la surface (35) ; dans la chambre à vide (39) la saleté et les résidus étant éliminés de la surface (35) à travers le tuyau d'admission (43) par aspiration, caractérisé en ce qu'un jet de vapeur (17) est injecté dans la chambre de pulvérisation à travers un second dispositif de distribution (45).

4. Dispositif pour laver et rendre plus hygiéniques les surfaces de la bande convoyeuse selon la revendication 3, caractérisé en ce que ledit conteneur (1), à l'intérieur duquel circule la bande (3) à nettoyer et à rendre plus hygiénique, comprend une ouverture d'entrée (5) et une ouverture de sortie (7) à travers lesquelles la bande (3) circulera ; des bandes plates appropriées (9) et (11) étant fournies à proximité desdites ouvertures (5,7) pour rendre étanches les cavités (13, 15) formées à l'intérieur du conteneur de type boîte (1) ; sur les parois supérieure et inférieure de la cavité (13), deux conduites (17, 19) étant fournies, au-dessus et au-dessous de la bande convoyeuse (3) à nettoyer, l'une desdites conduites étant la conduite de vapeur (17), l'autre étant la conduite d'eau ou de mélange de détergent (19) ; la vapeur et les mélanges d'eau ou de détergent étant pulvérisés sur la bande (3) à travers les dispositifs de distribution respectifs (21), (23) ;en aval de ladite chambre de pulvérisation (13), deux brosses abrasives (25) étant fournies, qui opèrent au-dessus et au-dessous de la bande (3) pour détacher la saleté éliminée de la bande par le jet de vapeur susdit (17) et le jet d'eau ou de mélange (19) ; en aval desdites brosses abrasives (25), la cavité sous vide (15) étant fournie, ladite cavité étant connectée, sur les deux côtés de la bande (3), aux deux conduites d'admission (27), adaptées pour aspirer la saleté éliminée de la bande (3) en plus de vapeur directe et restante transmise vers ladite chambre (15) et sortant de la chambre (13), lesdites conduites d'admission (27) opérant dans ladite chambre (15) à travers deux ouvertures d'admission (29).
